# EUROPEAN PATENT SPECIFICATION

(11) **EP 4 139 528 B1**
(45) Date of publication and mention of the grant of the patent: **11.12.2024**
(21) Application number: 21720749.7
(22) Date of filing: 22.04.2021
(51) Int. Cl.: E01C 13/08, B32B 5/18, D06N 7/00, B32B 5/02, B32B 5/06, B32B 5/26, B32B 7/12, B32B 5/24, B32B 3/06

(54) **ARTIFICIAL TURF**
KUNSTRASEN
GAZON ARTIFICIEL

(30) Priority: 23.04.2020 EP 20171010
(43) Date of publication of application: 01.03.2023
(73) Proprietor: BASF SE, 67056 Ludwigshafen am Rhein (DE); Innovationsmanufaktur GmbH, 80801 München (DE); Trofil Sportbodensysteme GmbH & Co. KG, 53773 Hennef (DE); Dr. Karl Wetekam & Co. Kg Kunststoff-Faeden, Baender, 34212 Melsungen (DE)
(72) Inventor: SCHOLZ, Guenter, 49448 Lemfoerde (DE); VALLO, Martin, 49448 Lemfoerde (DE); BRUENING, Kai, 49448 Lemfoerde (DE); THIELBEER, Frank, 49448 Lemfoerde (DE); MORITZ, Eckehard Fozzy, 80801 München (DE); WEDELL, Eike, 53773 Hennef (DE); WETEKAM, Karl, 34212 Melsungen (DE)
(74) Representative: Kudla, Karsten
(86) International application number: PCT/EP2021/060544
(87) International publication number: WO 2021/214229

(56) References cited:
- WO-A1-2007/002442
- WO-A1-2009/011569
- WO-A1-2013/183989
- WO-A2-2005/019533
- CN-A- 108 948 723
- DE-A1- 102012 024 685

## Description

The invention relates to an artificial turf comprising a damping layer made of a particle foam, a fiber backing and an artificial grass layer made of single or multiple fibers, the fibers being tied to the fiber backing forming an artificial carpet of grass.

Artificial turf is a commonly used floor covering which can be used inside buildings or outside buildings, for example for sportsgrounds, playgrounds or on terraces or balconies.

To achieve a feel and action and reaction effect of natural grass, artificial turf usually comprises a damping layer onto which a synthetic grass layer is placed. The synthetic grass layer thereby may be made of a woven fiber backing to which strands forming the blades of grass are connected.

Such an artificial turf which is formed of a damping layer made of resilient, open cell, expanded bead polypropylene and a synthetic turf pile carpet of a woven cloth to which tufts are fastened is described for example in EP-B 0 988 423 or in WO 2005/019533 A2.

420. For the natural feel of the artificial turf, a sand layer is deposited on the woven cloth enclosing the lower part of the tufts which form the blades of grass. US 3,332,828, US 3,551,63 and US 3,597,297 also describe an artificial turf composed of a base layer and an artificial grass layer with fibers knitted to a backing. The base layer according to US 3,332,828 or US 3,551,263 for example is a PVC foam and according to US 3,597,297 a polyurethane foam.

EP-A 1 842 963 describes an artificial turf which comprises an artificial grass layer and a base layer. The artificial grass layer and the base layer are permeable to water. This allows to use the artificial turf outdoor without sealing of the soil. A further artificial turf which is permeable to water for example is described in US-A 2005/0039511.

To achieve natural grass-like play characteristics, in US-A 2004/0229007 two distinct groups of fibers are used, the fibers extending upwardly from a backing. A stabilizing fill material resides on the backing and a group of fibers extends above the infill and a second group of fibers extends upwards from the backing but not above the fill. WO-A 98/40559 and DE 60 2005 005 630 T2 also disclose an artificial turf where a particulate material is applied on the backing which encloses the lower part of the fibers forming the blades of grass to support the fibers in an upright position.

US 4,882,208 describes a base layer which particularly can be used underneath artificial grass, wherein the base layer comprises a bottom layer of closed-cell crosslinked polyethylene foam material and an upper layer of a metallic layer. Shock absorbing pads for use underneath artificial grass also are described in US 4,505,960. Here particularly elastomer foams are used to achieve the required conditions.

A composite which is used in flooring surfaces to achieve an improved force reduction for example is described in WO 2018/206657.

In general, the German standard DIN 18035-7 describes the construction and the systems of an artificial turf for sports grounds.

It is a disadvantage of the artificial turfs of the art that for obtaining a natural grass feeling it is necessary to apply a particulate layer. Further, it is a disadvantage of the polymers usually used for forming the blades of grass, for example polypropylene, polyvinylchloride or polyamide, that these might irreversible bend or crack when a load is applied on, for example people walking on the artificial turf. Due to the particulate material which is used for keeping the fibers in upright position, the artificial turf only can be used in one place where it is installed. These artificial turfs cannot be used for mobile applications. Further for the artificial turfs of the art, usually it is necessary to keep them wet for avoiding injuries in case someone falls on the turf and slides on it. Furthermore, using different polymers for the separate layers of an artificial turf allows to have layers having ideal characteristics but recycling after reaching the end of life of the artificial turf, affords to separate the different layer which each are composed of a different polymer.

Therefore, it is an object of the present invention to provide an artificial turf which does not have the disadvantages of the artificial turfs known in the art.

This object is achieved by an artificial turf according to claim 1. The artificial turf comprises a damping layer made of a particle foam, a fiber backing and an artificial grass layer made of single fibers, the single fibers being tied to the fiber backing forming an artificial carpet of grass, wherein the particle foam, the fiber backing and the single or multiple fibers forming the artificial grass layer are made of thermoplastic elastomers which are composed of the same monomer units respectively from the same components in case of a compound structure and the different characteristics of the layers are established by variation in the ratio of hard phases and soft phases in the thermoplastic elastomer.

By forming all layers of a thermoplastic elastomer which is composed of the same monomer units, an efficient polymer recycling is possible without sorting by polymer type. The whole artificial turf can be fed into a recycling process without previous separating.

It also had shown that when using a polymer which comprises a thermoplastic elastomer for the single fibers forming the artificial grass layer, the fibers stand up again after they were bended by a load on them. Therefore, no particulate layer needs to be applied on the backing which keeps the fibers in an upright position. Another advantage of using a polymer comprising a thermoplastic elastomer is that the blades of grass are softer which reduces the risk of injuries.

It is a further advantage of omitting the particulate layer that the artificial turf easily can be outlaid on the ground and be removed from the ground later. This allows to furnish a floor with the artificial turf for specific occasions which shall take place on an artificial turf and to remove it afterwards so that the place where the artificial turf was furnished for that specific occasion can be used for a different action where no artificial turf is necessary at another time.

The artificial turf can be furnished for example on a floor in a building, for example in a sports hall or an event hall or outside a building. If it is used outside a building, the artificial turf can be outlaid on any smooth ground, for example concrete or plaster, on tiles or paving stones or on flattened soil or sand. Particularly for use on hard surfaces like concrete, plaster, tiles, paving stones or for indoor use, by the damping layer a feeling can be created which corresponds to the feeling of a natural lawn. For outdoor use it is also possible to provide a particulate layer on the artificial turf for example for a natural feeling like a sandy lawn or as additional load for a safe placing, for example to keep the artificial turf on its place at heavy weather conditions like storms. However, it is particularly preferred to use the artificial turf without a particulate layer.

Different damping characteristics of the damping layer for example can be established by the composition of the thermoplastic elastomer used for producing the damping layer, the packing density of the particle foam, the size of the particles used for the particle foam or the thickness of the damping layer. For achieving a suitable damping effect which saves the junctions and reduces the injuries in case of a fall, it is preferred if the damping layer has a rebound of more than 30%, preferably more than 50% measured according to DIN 53512:2000. In addition to the rebound of the damping layer, it is preferred that the damping layer shows a low compression set, means a very little residual deformation. The density of the particle foam used for the damping layer preferably is in the range from 0.01 to 0.5 g/cm³ and particularly in the range from 0.1 to 0.4 g/cm³. Further, the thickness of the damping layer preferably is in the range from 1 to 100 mm, and particularly in the range from 2 to 50 mm. The expanded beads which are used for producing the particle foam for the damping layer preferably have an oval or circular shape and the maximum extension is in the range from 2 to 30 mm, more preferred in the range from 2 to 20 mm and particularly in the range from 2 to 10 mm. Thereby the damping layer usually comprises between 2 and 30 more preferred between 1 and 20 and particularly between 1 and 15 layers of particles.

Using a particle foam for the damping layer instead of a structural foam has the advantage that it is possible to produce expanded beads which all have the same characteristics and to achieve different characteristics of the damping layer simply by variation in packing density and/or thickness of the damping layer. Further, it is easier to achieve a damping layer which is permeable to water when using a particle foam as it is possible to form the particle foam from beads which are connected in such a way that passages form between the beads which allow water to drain through the damping layer. To provide a water permeability of the particle foam particularly is necessary in case the artificial turf is used for outdoor applications. By the water permeability it is avoided that water puddles form on the artificial turf after rain and it is ascertained that the water can drain from the surface of the artificial turf to the ground underneath.

On the other hand, for example for an artificial turf which only shall be used in indoor applications, a dense particle foam without passages can be used because for indoor applications a water permeability of the particle foam is not necessary.

The beads used for the particle foam are made of an expanded polymer comprising a thermoplastic elastomer, particularly of an expanded thermoplastic elastomer. Thereby, the beads may be formed of a closed-cell foam or an open-cell foam. Preferably, the expanded beads have a closed skin. The beads for the particle foam can be made by conventional methods for producing expanded beads. Expanded bead for example can be produced by producing pellets for example in an extrusion process and to impregnate the pellets in an aqueous suspension with a blowing agent under elevated pressure. Subsequently, the pellets expand forming expanded beads by pressure reduction. Alternatively, expanded pellets can be obtained in an extrusion process wherein the blowing agent is added in the extruder and the polymer melt expands when passing the extrusion die and is cut into expanded beads or blowing agent comprising expandable beads are formed for example in an underwater granulation and expanded in a separate process step. Such methods for example are described in WO-A 2007/082838 for producing expanded beads of thermoplastic polyurethane.

For producing the particle foam for the damping layer, the pellets have to be tightly connected.

The beads for example can be connected by gluing or by welding. For gluing, it is for example possible to provide the beads with an adhesive and to fill the beads with the adhesive on their surface into a die for forming the particle foam for the damping layer. However, preferably the expanded beads are connected by welding. For forming the damping layer by a welded particle foam, the expanded beads for example can be filled into a mold by air pressure, afterwards hot steam will be pressed by several dies, often from both sides of the mold. While passing the expanded beads, these soften at their surface and adhere to each other, supported by increasing the pressure. Generally the mold is closed in such a way that a gap remains between the parts of the mold and after filling the mold with the expanded beads and passing steam through the mold, the mold is further closed to increase the pressure and to connect the expanded beads. Thereby, a component is formed which has the shape of the mold.

For easier handling and better adhesion to other polymer layers, particularly the damping layer, the fiber backing also is made of a thermoplastic elastomer. Using a thermoplastic elastomer has the additional advantage, that the artificial grass layer can be connected to the damping layer by conventional means for connecting thermoplastic polymers, for example gluing or welding.

If the fiber backing is connected to the damping layer by using an adhesive, it is preferred to use an adhesive which is composed of the same monomer units as the polymer the fiber backing and/or the damping layer are made of.

Preferably, the fibers forming the blades of grass are fixed to the fiber backing by knotting or tufting. This affords the fiber backing to comprise passages through which the fibers forming the blades of grass can be passed. Suitable forms of the fiber backing therefore are woven fabrics, knitted fabrics, crocheted fabrics or nonwoven fabrics, with woven fabrics being preferred as fiber backing. Furthermore, the fiber backing can comprise every suitable textile surface structure known by a person skilled in the art. Also laid textiles are possible as fiber backing. As fiber backing in addition foils or mats are possible, which may be stretched or unstretched. Stretched foils or mats may be stretched in one direction (monoaxially stretched) or in two directions (biaxially stretched).

The fiber backing can be produced according to any method known to a skilled person. Preferably, the fiber backing has a similar size and thickness which is used for artificial turf constructions at the state of the art. Further preferred is that the thickness of the fiber backing is in the range of about 0.2 mm to about 3 mm.

The blades of grass which are fixed to the fiber backing preferably are formed from a monofilament or a bundle of monofilaments (multifilament), which is cut into suitable short fibers during the tufting process, the short fibers having the respective length for forming the blades of grass of the artificial turf. The cross-sectional area of the monofilament or the bundle of monofilaments may have any shape. The choice of suitable shapes depends on the use of the artificial turf in the final state. Monofilaments may for example be produced by direct extrusion of monofilaments or by extrusion of tapes from which monofilaments are cut off. Different types of monofilaments and/or bundles of monofilaments may be combined in the artificial turf. The blades of grass further can be smooth or crinkled. If crinkled blades of grass are used, it is particularly preferred that the artificial turf contains smooth and crinkled blades, wherein the crinkled blades particularly support the even blades to keep their upright position. The blades may for example be fixed to the fiber backing by using a spacer fabric process. In the spacer fabric process two layers of fiber backing are placed in a parallel arrangement with a certain space between the two layers of fiber backing. During the process the monofilaments or the bundle of monofilaments (multifilaments), which are forming the blades, are woven in between the two layers of fiber backing. In that way the two layers of fiber backing are fixed to each other by an intermediate layer of filaments (monofilaments or bundle of monofilaments). The result of the spacer fabric process is a three dimensional (3-D) woven product. By cutting the filaments between the two layers of fiber backing, two separate fiber backings with blades fixed on the fiber backings are formed, resulting in artificial carpets of grass. Cutting may for example be conducted in any position between the two fiber backing layers and not only in the middle.

The density / number of blades in particular tufted into the fiber backing (number of blades per meter) may vary depending on the application for which the artificial turf is intended. For example, the number of blades per meter is above 50, is above 200, is above 500 or is above 750. Preferred is that the number of blades per meter is in the range of about 100 to about 2000, more preferably about 500 to about 1750, most preferably about 1000 to about 1500. In addition, the fiber backing may comprise single blades or a bunch of blades which are fixed to the fiber backing. The process for fixing single blades or bunches of blades with the fiber backing comprises in particular gluing, tufting, sewing or weaving. The number of blades in the fiber backing may vary depending on the desired density of the artificial turf / artificial carpet of grass.

For the shape of the blades, different sizes and shapes are possible. It is preferred that the cross-sectional area of the blades is round, oval, ellipsoid, flat, sickle-shaped, lunate, rectangular, oblong or square. Flat and oval blades are particularly preferred. The blades can have every considerable color, for example green, yellow, blue, red or mixtures thereof. Furthermore, it is possible that differently colored blades are combined for the artificial turf. The length of the blades of the artificial turf is for example in the range of about 1 mm to about 80 mm, about 2 mm to about 60 mm, preferably about 3 mm to about 50 mm, more preferably about 4 mm to about 45 mm, most preferably about 8 mm to about 40 mm. When using the spacer fabric process after cutting of the three dimensional (3-D) woven product (artificial carpet of grass) the length of the blades is for example in the range of about 1 mm to about 80 mm, about 2 mm to about 60 mm, preferably about 3 mm to about 50 mm, more preferably about 4 mm to about 45 mm, most preferably about 8 mm to about 40 mm.

By the selection of a suitable cross-sectional area in connection with a polymer comprising a thermoplastic elastomer as material for the mono- or multifilament which is used for producing the blades of grass, results in a feeling of the artificial turf which is very close to the feeling of natural grass. The polymer comprising a thermoplastic elastomer used for producing the blades of grass either can be a thermoplastic elastomer or a co-extrudate of at least two different polymers, one of which is a thermoplastic elastomer. If a co-extrudate is used for the filament from which the fibers forming the blades of grass are formed, a co-extrudate of two polymers is preferred.

The monofilaments for example are produced by an extrusion process in which continuous filaments are produced by pressing a polymer melt through a suitable die. The thus formed continuous filaments are wound to bales and knitted or tufted to the fiber backing from the bale and cut into single fibers during the knitting or tufting, forming the blades of grass.

The monofilaments further can be produced by film extrusion like flat film extrusion or blown film extrusion, where the film produced by extrusion subsequently is cut into stripes having the desired width for the monofilaments. In this case the monofilaments have a rectangular flat cross sectional area. During the tufting process, the monofilaments are cut in small pieces, resulting in blades, which are flat and from cross-sectional perspective are oval or rectangular.

The fibers for forming the grass layer of the artificial turf may all have the same length. In this case, also all blades of grass have the same length. Alternatively, it is also possible to use fibers having different lengths. In this case it is particularly preferred that the fibers have two different lengths by which a grass layer is obtained having long blades of grass and short blades of grass. In this case the short blades of grass support the long blades of grass to remain standing upright and a denser filling can be achieved. Particularly if fibers of different lengths are used for forming the grass layer, the tufting process has to be done two times, means first for short fiber layer, secondly for the longer ones. Suitable tufting machines can do this in one run simultaneously.

Alternatively, it is also possible to tuft monofilaments of two different polymers with different shrinking behavior which all have the same length. After the tufting process, the grass carpet is subject to a temperature treatment by which the blades of grass made of monofilaments of one polymer keep upright and the blades of grass made of monofilaments of a second polymer form curls. In this way, the blades of grass which are not curled are supported in their upright position by the curled blades of grass.

The thermoplastic elastomer which is used for producing the particle foam, the fibers for forming the blades of grass and the fiber backing preferably is a thermoplastic polyolefin elastomer (TPO), a thermoplastic vulcanizate (TPV), a thermoplastic styrenic block copolymer (TPS), a thermoplastic polyurethane (TPU), a thermoplastic copolyester (TPC), a thermoplastic polyamide (TPA) or a mixture of at least two of these. Preferably the thermoplastic elastomer is a TPS or a compound comprising TPS, a TPU, a TPC or a TPA, particularly preferably the thermoplastic elastomer is a TPU.

To achieve the different required characteristics of the polymer for the damping layer, the fiber backing and the single fibers for the grass layer, it is possible to use different thermoplastic elastomers. Further, the different characteristics can be achieved by variation of the hard phases and the soft phases of the thermoplastic elastomer or by adding suitable additives. One way is to classify the material stiffness by Shore hardness. In that case independently of the thermoplastic elastomer, the Shore hardness range for grass blades is 80A to 85D, preferably 40D to 70D, for fiber backing 40D to 85D, preferably 60D to 85D.

An advantage of the present invention is that the blades show elastic behavior and the blades are resistant against kinking when stepping on the blades of the artificial turf of the present invention. For the blades in particular a combination of soft and hard TPU is possible. Preferably the soft TPU has a shore hardness of 70A to 60D, the hard TPU preferably has a shore hardness of 90A to 80D.

Additives which can be added to the thermoplastic elastomer can be any additives known to a skilled person. Such additives can be present for example in the damping layer, in the fiber backing and/or in the grass layer. Typical additives for example are surface-active substances, fillers, flame retardants, anti-statics, nucleating agents, antioxidants, lubricants and mold-release agents, dyes and pigments, stabilizers, e.g. with respect to hydrolysis, light, heat or discoloration, reinforcing agents, and plasticizers. Additives may be combined with each other, for example lubricant and flame-retardant additives. Particularly if the artificial turf shall be used in outdoor applications, it is preferred to add stabilizers with respect to hydrolysis, light, heat and discoloration to achieve a polymer which is stable to environmental conditions. To achieve the necessary stiffness in the thermoplastic elastomer used for the fiber backing, it is further possible to add fibers, for example glass fibers, mineral fibers, or polymer fibers and/or particulate fillers like inorganic fillers or organic fillers for example talc, mineral particles or thermoplastic polymers like PBT or POM.

Suitable fillers for the fiber backing preferably are inorganic fillers like minerals, metal carbonates or sulfates, glass fibers, carbon fibers, thermoplastic polymers selected form the group consisting of polyamide (PA), polybutylene terephthalate (PBT), polyoxymethylene (POM), polystyrene (PS) and copolymers of polystyrene (PS) comprising for example acrylonitrile butadiene styrene (ABS), styrene acrylonitrile (SAN), acrylonitrile styrene acrylate (ASA) or elastomeric grades like thermoplastic styrenic block copolymer (TPS), thermoplastic copolyester (TPC), thermoplastic polyamides (TPA).

Suitable fillers for the blades preferably are selected form the group consisting of polyamide (PA), polybutylene terephthalate (PBT), polyoxymethylene (POM), polystyrene (PS) and copolymers of polystyrene (PS) comprising for example acrylonitrile butadiene styrene (ABS), styrene acrylonitrile (SAN), acrylonitrile styrene acrylate (ASA) or elastomeric grades like thermoplastic styrenic block copolymer (TPS), thermoplastic copolyester (TPC), thermoplastic polyamides (TPA).

Suitable fillers for the damping layer preferably are selected form the group consisting of polyamide (PA), polybutylene terephthalate (PBT), polyoxymethylene (POM), polystyrene (PS) and copolymers of polystyrene (PS) comprising for example acrylonitrile butadiene styrene (ABS), styrene acrylonitrile (SAN), acrylonitrile styrene acrylate (ASA) or elastomeric grades like thermoplastic styrenic block copolymer (TPS), thermoplastic copolyester (TPC), thermoplastic polyamides (TPA).

Using different polymers for the separate layers allows to have layers having ideal characteristics but recycling after reaching the end of life of the artificial turf, affords to separate the different layer which each are composed of a different polymer. As the artificial grass layer composed of the fiber backing and the fibers forming the blades of grass is connected non-detachably to the damping layer by gluing with an adhesive or by welding, the artificial grass layer cannot be separated from the damping layer in an easy way. Therefore, the particle foam, the fiber backing and the fibers blades forming the artificial grass layer are made of thermoplastic elastomers which are composed of the same monomer units and the different characteristics of the layers are established by variations in the ratio of hard phases and soft phases in the thermoplastic elastomer and optionally added additives in each thermoplastic elastomer. By forming all layers of a thermoplastic elastomer which is composed of the same monomer units, an efficient polymer recycling is possible without sorting by polymer type. The whole artificial turf can be fed into a recycling process without previous separating. If the damping layer is connected to the artificial grass layer by gluing with an adhesive, for such a recycling without sorting it is further necessary that the adhesive used for gluing the damping layer to the artificial grass layer is composed of the same monomer units as the other layers.

In a preferred embodiment the artificial turf contains only one material type, particularly only thermoplastic polyurethane (TPU). This means that in particular the blades, the fiber backing and the damping layer are consisting of TPU. It is further preferred that for bringing the three components blades, fiber backing and damping layer together, a TPU glue (e.g. TPU hot-melt) is used in order to ensure that the three components of the artificial turf are glued or welded together. To weld the TPU layers together, the material can be activated thermally by heat, Infrared, microwave, high frequency or quite similar energy sources. TPU glue can also be used for gluing the expanded TPU foam particles together resulting in the damping layer. With that the one-material-concept for the artificial turf can be ensured. Using only one material for the construction of the artificial turf enables a recycling of the artificial turf. For example, after use, the artificial turf can be processed thermally, mechanically and/or chemically, in particular by compounding in an extruder and an optional size reduction in advance via for example a mechanical cutting or granulation equipment. After that, the processed (compounded) material can be re-used for the manufacturing of blades, fiber backing and/or damping layer. Finally, combining/joining these elements together results in obtaining a recycled artificial turf. The recycled artificial turf then still consists of only one material type, particularly only thermoplastic polyurethane (TPU).

In another preferred embodiment the artificial turf contains more than 50 % of TPU and less than 50 % of other polymers selected form the group consisting of polyamide (PA), polybutylene terephthalate (PBT), polyoxymethylene (POM), polystyrene (PS) and copolymers of polystyrene (PS) comprising for example acrylonitrile butadiene styrene (ABS), styrene acrylonitrile (SAN), acrylonitrile styrene acrylate (ASA) or elastomeric grades like thermoplastic styrenic block copolymer (TPS), thermoplastic copolyester (TPC), thermoplastic polyamides (TPA). With that still a recycling of the artificial turf is possible. For example, after use, the artificial turf can be processed thermally, mechanically and/or chemically, in particular by compounding in an extruder and an optional size reduction in advance via for example a mechanical cutting or granulation equipment. After that, the processed (compounded) material can be re-used for the manufacturing of blades, fiber backing and/or damping layer. Finally, combining/joining these elements together results in obtaining a recycled artificial turf. The recycled artificial turf then particularly still contains more than 50 % of TPU and less than 50 % of other polymers selected form the group consisting of polyamide (PA), polybutylene terephthalate (PBT), polyoxymethylene (POM), polystyrene (PS) and copolymers of polystyrene (PS) comprising for example acrylonitrile butadiene styrene (ABS), styrene acrylonitrile (SAN), acrylonitrile styrene acrylate (ASA) or elastomeric grades like thermoplastic styrenic block copolymer (TPS), thermoplastic copolyester (TPC), thermoplastic polyamides (TPA).

For producing the artificial turf, it is possible to first produce the damping layer and the artificial grass layer and then connect the damping layer to the artificial grass layer. Alternatively, it is also possible, to firstly produce the artificial grass layer and to produce the damping layer directly on the artificial grass layer. In this case, if the expanded beads for the particle foam are glued by an adhesive, the expanded beads with the adhesive layer are applied on the fiber backing and the particle foam is formed directly on the artificial grass layer by gluing the adhesive coated expanded beads. To achieve the particle foam in the desired form, preferably, the artificial grass layer is placed into a mold or frame and the adhesive coated expanded beads then are fed into the mold or frame to form the particle foam.

If the expanded particles are welded to form the particle foam and the particle foam shall be welded to the artificial grass layer, it is preferred, to firstly produce the artificial grass layer and to place the artificial grass layer into a mold or frame. Afterwards, the expanded beads are fed into the mold or frame and then for forming the particle foam and to weld the particle foam to the artificial grass layer, hot steam is passed through the mold. Feeding the particles into the mold or frame and producing the particle foam thereby is carried out as known to a skilled person.

As in contrast to the artificial turfs of the state of the art no particle layer is necessary, the artificial turf of the present invention is mobile and can be installed and uninstalled and transported to a location where an artificial turf is needed in an easy way. Possible applications for the artificial turf of the present invention are for example in the field of sports (indoor and/or outdoor), landscape applications, construction application, gardening, for green roofs, traffic islands.

To allow an easy transport, the artificial turf preferably is produced in modules having a size which allows transportation. If an artificial lawn shall be outlaid which is bigger than one module, several modules of the artificial turf are outlaid and thus the artificial lawn using the artificial turf is composed of at least two modules made of the inventive artificial turf. The modules of the artificial turf either may have a size which allows a transportation of flat modules or alternatively, the modules have a size which allows to roll them forming coils. Dependent of the size of the modules, the modules can be transported or stored of they are not used either as flat modules or rolled up as coils.

If the artificial lawn is composed of at least two modules, adjacent modules have to be fixed to avoid shifting of single modules which may result in gaps between the modules. Such gaps may cause severe injuries if someone steps into such a gap and stumbles of if someone falls on the artificial lawn and slides into such a gap and gets stuck, for example if the artificial lawn is used for a sports field.

To fix adjacent modules, it is for example possible to design the modules with edges which can be plugged into one another. The form of the edges thereby preferably is such that they have undercuts which engage. Besides providing the modules with undercuts on the edges which engage, it is also possible to provide the modules with groove and tongue.

When using modules having straight edges shifting of the modules also can be avoided by placing the modules on a ground which is surrounded by a frame against which the outermost modules rest.

If a permanent artificial lawn shall be placed, it is possible to glue or weld adjacent modules to each other. By gluing or welding a permanent connection is achieved and therefore, the artificial lawn produced thus usually is no longer mobile.

Therefore, to achieve a mobile artificial lawn, it is particularly preferable to connect the modules either by plugging adjacent modules into each other or by placing the lawn in a frame.

Illustrative embodiments of the invention are shown in the figures and explained in more detail in the following description.

In the figures:
- Figure 1: shows a cross sectional view of an artificial turf in a first embodiment,
- Figure 2: shows a cross sectional view of an artificial turf in a second embodiment,
- Figure 3: shows a cross sectional view of an artificial turf in a third embodiment,
- Figure 4: shows an artificial lawn.

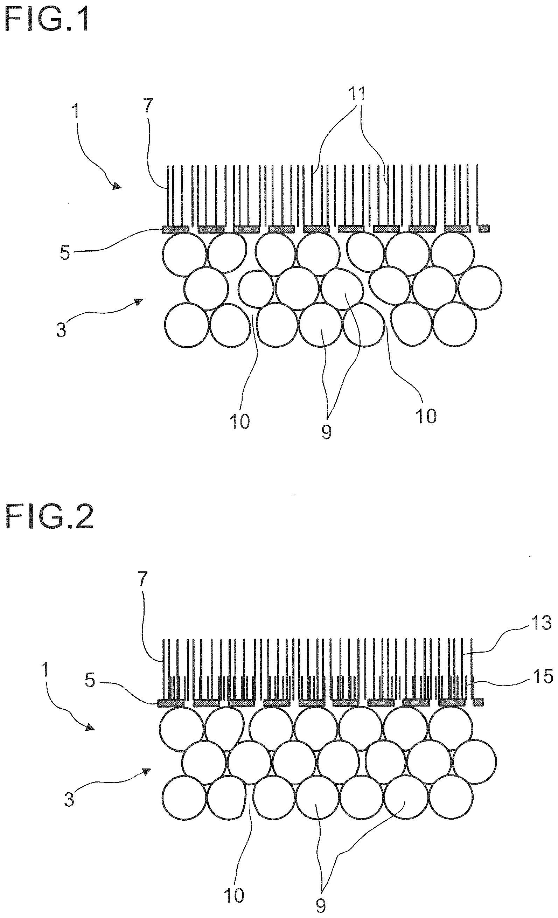

Figure 1 shows an artificial turf in a first embodiment.

An artificial turf 1 is composed of a damping layer 3, a fiber backing 5 and an artificial grass layer 7. The damping layer 3 is formed from a particle foam which is composed of expanded beads 9 which are connected one to another. The expanded beads are made from a thermoplastic elastomer, particularly from a thermoplastic polyurethane (TPU). For producing the particle foam, in a first step expanded beads are produced. These beads then are connected to one another usually in a die under pressure. The pressure depends on the intended density of the particle foam. For connecting the expanded beads 9, the expanded beads 9 can be glued by using an adhesive or welded. Welding the expanded beads 9 by passing hot steam through the die is preferred. However, if an adhesive is used for gluing the expanded beads, it is preferred to use an adhesive which is composed of the same monomer units as the polymer used for producing the expanded beads 9.

Preferably, the expanded beads 9 are connected such that passages 10 form between the beads. Such passages 10 allow draining of water which is particularly preferred in case the artificial turf 1 is used in outdoor applications to avoid forming puddles on the artificial turf 1.

To the damping layer 3 a fiber backing 5 is fixed. For fixing the fiber backing 5 on the damping layer 5, it is possible to weld the fiber backing 5 on the damping layer 3 or to glue the fiber backing 5 on the damping layer 3. To avoid adding an additional polymer, also for fixing the fiber backing 5 on the damping layer 3 welding is preferred. If an adhesive is used, also for gluing the fiber backing 5 on the damping layer 3 it is preferred to use an adhesive which is composed of the same monomer units as the polymer used for producing the expanded beads 9.

To allow fibers for forming the artificial grass layer 7 being connected to the fiber backing 5, the fiber backing is a woven fabric, knitted fabric, crocheted fabric, laid textile, mat, foil or nonwoven fabric.

Further, also the fiber backing 5 is produced of a polymer which is composed of the same monomer units as the polymer of the expanded beads 9. Using polymers being composed of the same monomer units has the advantage that recycling without separating and sorting the layers is possible.

In figure 1, the artificial grass layer 7 comprises blades of grass 11, which are made of fibers all having the same length. The fibers are connected to the fiber backing 5 thus forming the artificial grass layer 7. Connecting the fibers for forming the blades of grass 11 to the fiber backing 5 preferably is carried out by knotting or by tufting.

For allowing recycling without separating and sorting, also the fibers used for forming the blades of grass 7 are produced of a polymer which is composed of the same monomer units as the damping layer 3 and the fiber backing 5.

Figure 2 shows an artificial turf 1 in a second embodiment.

The artificial turf 1 of figure 2 differs from the artificial turf of figure 1 only in the artificial grass layer 7. In figure 2, the artificial grass layer 7 is composed long blades of grass 13 and short blades of grass 15. The different length of grass can be achieved by using different fiber lengths for the fibers forming the blades of grass or by firstly forming the short blades of grass 15 and in a second step the long blades of grass 13. This is particularly preferred, when for forming the blades of grass loops are formed which then are cut into the separate blades of grass during the tufting process.

As for the artificial turf shown in figure 1, also for the artificial turf shown if figure all layers are formed of thermoplastic elastomers which are composed of the same monomer units respectively from the same components in case of a compound structure. and to employ the different characteristics particularly by variation of the soft phases and hard phases and optionally additionally by adding additives.

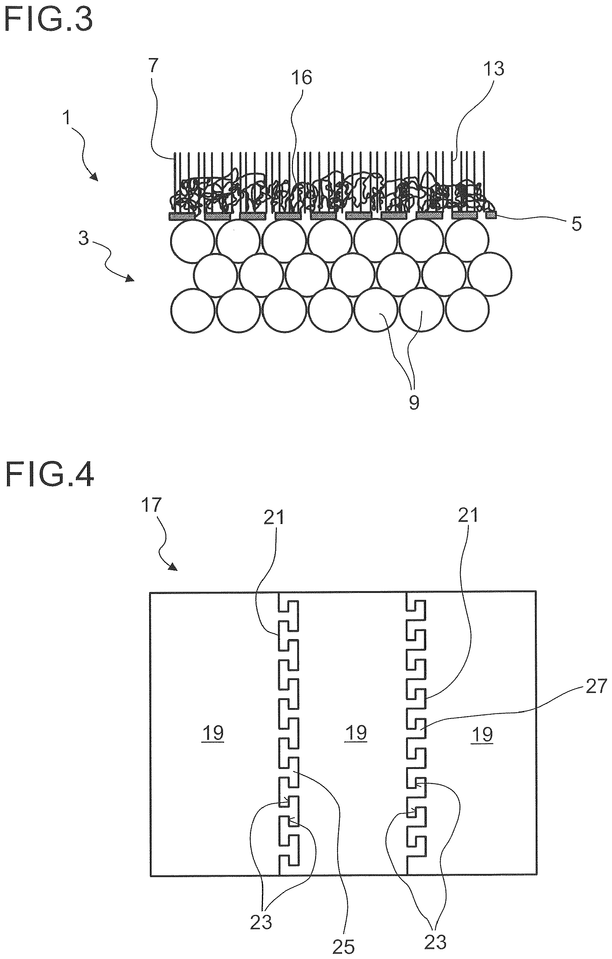

Figure 3 shows an artificial turf 1 in a third embodiment.

In difference to the artificial turf 1 in figure 2, the artificial turf 1 of figure 3 comprises long blades of grass 13 and curled blades of grass 16. The curled blades of grass 16 for example can be produced of a polymer having a composition such that the polymer curls on a temperature treatment. In this case, the artificial carpet of grass comprising the fiber backing 5 and the blades of grass 13, 16 is formed with all blades being smooth. After producing, for example by tufting, the artificial carpet of grass is subjected to a temperature treatment such that some of the blades of grass made of the polymer which curls on temperature treatment curl and form a layer of curled blades of grass 16 which supports the smooth long blades of grass 14 standing upright.

Besides curling a part of the blades of grass by a temperature treatment, it is also possible to produce curled or crinkled monofilaments which are used as curled blades of grass 16. However, for facilitating the production process it is preferred to use two kinds of polymer, one which keeps smooth on a temperature treatment and one which curls on temperature treatment.

Figure 4 shows a top view of an artificial lawn.

An artificial lawn 17 is formed of several modules 19, each of the modules 19 made of an artificial turf as shown in one of figures1, 2 or 3. By forming the artificial lawn 17 using a plurality of modules 19, it is possible to provide a large area with the artificial lawn 17 but keeping the artificial lawn 17 transportable if it shall not be outlaid permanently.

To avoid slipping of the modules 19 and thereby forming gaps between the modules 19 it either is possible to weld or glue the modules one to another or to plug adjacent modules 19 into each other. Gluing or welding only is suitable if the artificial lawn is outlaid permanently. For a transportable artificial lawn 17, it is preferred to plug adjacent modules into each other. For plugging the modules 19 into each other it is preferred to provide the edges 21 of the modules 19 with undercuts 23 which engage. By the engaging undercuts a detachable but stable connection of the modules 19 can be achieved.

As shown in figure 4, the undercut 23 for example can be achieved by T-shaped extensions 25 or L-shaped extensions 27 which can be plugged into each other. Besides the T-shaped or L-shaped extensions any other shape having an undercut can be used, for example also a shape like a piece of a puzzle.

The extensions which are used to plug adjacent modules 19 into each other in figure 4 are only shown exemplary. Usually only one type of extensions will be provided for one artificial lawn 1. If different extension will be used, it is preferred to provide each module with the same extensions to facilitate outlaying the modules 19. However, particularly in case a specific order of the modules is necessary, for example for outlaying a pattern of the artificial lawn, it is advantageous to provide different extensions on each edge to ensure that each module 19 is placed to the correct position.

## Claims

1. An artificial turf comprising a damping layer (3) made of a particle foam, a fiber backing (5) and an artificial grass layer (7) made of single or multiple fibers, the fibers being tied to the fiber backing forming an artificial carpet of grass,
**characterised in that**
the particle foam, the fiber backing (5) and the single or multiple fibers forming the artificial grass layer (7) are made of thermoplastic elastomers which are composed of the same monomer units respectively from the same components in case of a compound structure and the different characteristics of the layers are established by variation in the ratio of hard phases and soft phases in the thermoplastic elastomer.

2. The artificial turf according to claim 1 wherein each thermoplastic elastomer comprises added additives.

3. The artificial turf according to claim 1 or 2, wherein the particle foam is formed from expanded beads (9) which are connected in such a way that passages (10) form between the expanded beads (9) which allow water to drain through the damping layer (3).

4. The artificial turf according to claim 3, wherein the beads (9) of the particle foam are connected by gluing or by welding.

5. The artificial turf according to any of claims 1 to 4, wherein the fiber backing (5) is a woven fabric, a knitted fabric, a crocheted fabric, a laid textile, a mat, a foil or a nonwoven fabric.

6. The artificial turf according to any of claims 1 to 5, wherein the single fibers of the artificial grass layer (7) have different lengths forming long blades of grass (13) and short blades of grass (15).

7. The artificial turf according to any of claims 1 to 5, wherein the artificial carpet of grass comprises blades of grass being straight upright and blades of grass which are curled.

8. The artificial turf according to any of claims 1 to 7, wherein the fiber backing (5) is connected to the damping layer by gluing or welding.

9. The artificial turf according to claim 8, wherein for gluing the fiber backing (5) on the damping layer (3) an adhesive is used which is composed of the same monomer units as the polymer the fiber backing (5) is made of.

10. The artificial turf according to any of claims 1 to 9, wherein the thermoplastic elastomer is a thermoplastic polyolefin elastomer (TPO), a thermoplastic vulcanizate (TPV), a thermoplastic styrenic block copolymer (TPS) or compound, a thermoplastic polyurethane (TPU), a thermoplastic copolyester (TPC) or a thermoplastic polyamide (TPA).

11. An artificial lawn composed of at least two modules (19) made of an artificial turf (1) according to any of claims 1 to 10.

12. The artificial lawn according to claim 11, wherein adjacent modules (19) are plugged into each other.

13. The artificial lawn according to claim 12, wherein adjacent modules (19) are glued or welded to each other.

14. The artificial lawn according to any of claims 11 to 13, wherein the at least two modules (19) have a size which allows to roll them for forming coils for transportation.

## Patentansprüche

1. Kunstrasen umfassend eine Dämpfungsschicht (3) aus einem Partikelschaum, einen Faserträger (5) und eine künstliche Graschicht (7) aus Einzel- oder Mehrfachfasern, wobei die Fasern an den Faserträger gebunden sind, um einen künstlichen Grasteppich zu bilden,
**dadurch gekennzeichnet, dass**
der Partikelschaum, der Faserträger (5) und die Einzel- oder Mehrfachfasern, die die künstliche Graschicht (7) bilden, aus thermoplastischen Elastomeren bestehen, die im Fall einer Verbundstruktur aus den gleichen Monomereinheiten bzw. aus den gleichen Komponenten bestehen, und die verschiedenen Eigenschaften der Schichten durch Variation des Verhältnisses von harten Phasen und weichen Phasen in dem thermoplastischen Elastomer erhalten werden.

2. Kunstrasen nach Anspruch 1, wobei jedes thermoplastische Elastomer zugesetzte Zusatzstoffe umfasst.

3. Kunstrasen nach Anspruch 1 oder 2, wobei der Partikelschaum aus expandierten Perlen (9) gebildet ist, die so verbunden sind, dass zwischen den expandierten Perlen (9) Durchgänge (10) gebildet sind, die Abfließen von Wasser durch die Dämpfungsschicht (3) erlauben.

4. Kunstrasen nach Anspruch 3, wobei die Perlen (9) des Partikelschaums durch Kleben oder durch Schweißen verbunden sind.

5. Kunstrasen nach einem der Ansprüche 1 bis 4, wobei der Faserträger (5) ein gewebtes Gewebe, ein Strickgewebe, ein Häkelgewebe, ein gelegtes Textil, eine Matte, eine Folie oder ein Vliesstoff ist.

6. Kunstrasen nach einem der Ansprüche 1 bis 5, wobei die Einzelfasern der künstlichen Grasschicht (7) unterschiedliche Längen aufweisen, um lange Grashalme (13) und kurze Grashalme (15) zu bilden.

7. Kunstrasen nach einem der Ansprüche 1 bis 5, wobei der künstliche Grasteppich Grashalme, die gerade aufrecht sind, und Grashalme, die wellig sind, umfasst.

8. Kunstrasen nach einem der Ansprüche 1 bis 7, wobei der Faserträger (5) durch Kleben oder Schweißen mit der Dämpfungsschicht verbunden ist.

9. Kunstrasen nach Anspruch 8, wobei zum Kleben des Faserträgers (5) an die Dämpfungsschicht (3) ein Klebstoff verwendet wird, der aus den gleichen Monomereinheiten besteht wie das Polymer, aus dem der Faserträger (5) besteht.

10. Kunstrasen nach einem der Ansprüche 1 bis 9, wobei das thermoplastische Elastomer ein thermoplastisches Polyolefin-Elastomer (TPO), ein thermoplastisches Vulkanisat (TPV), ein(e) thermoplastische(s) Styrol-Blockcopolymer (TPS) oder -verbindung, ein thermoplastisches Polyurethan (TPU), ein thermoplastischer Copolyester (TPC) oder ein thermoplastisches Polyamid (TPA) ist.

11. Künstlicher Rasen, zusammengesetzt aus wenigstens zwei Modulen (19) aus einem Kunstrasen (1) nach einem der Ansprüche 1 bis 10.

12. Künstlicher Rasen nach Anspruch 11, wobei benachbarte Module (19) ineinandergesteckt sind.

13. Künstlicher Rasen nach Anspruch 12, wobei benachbarte Module (19) aneinandergeklebt oder aneinandergeschweißt sind.

14. Künstlicher Rasen nach einem der Ansprüche 11 bis 13, wobei die wenigstens zwei Module (19) eine Größe aufweisen, die Aufrollen zum Bilden von Rollen zum Transport erlauben.

## Revendications

1. Gazon artificiel comprenant une couche d'amortissement (3) composée d'une mousse particulaire, d'un support fibreux (5) et d'une couche de gazon artificiel (7) composée de fibres individuelles ou multiples, les fibres étant attachées au support fibreux formant un tapis artificiel d'herbe,
**caractérisé en ce que**
la mousse particulaire, le support fibreux (5) et les fibres individuelles ou multiples formant la couche de gazon artificiel (7) sont composés d'élastomères thermoplastiques qui sont composés des mêmes unités monomères respectivement des mêmes composants dans le cas d'une structure composite et les différentes caractéristiques des couches sont établies par variation du rapport de phases dures et de phases souples dans l'élastomère thermoplastique.

2. Gazon artificiel selon la revendication 1, dans lequel chaque élastomère thermoplastique comprend des additifs ajoutés.

3. Gazon artificiel selon la revendication 1 ou 2, dans lequel la mousse particulaire est formée à partir de billes expansées (9) qui sont reliées de telle manière que des passages (10) se forment entre les billes expansées (9) qui permettent à de l'eau d'être drainée à travers la couche d'amortissement (3).

4. Gazon artificiel selon la revendication 3, dans lequel les billes (9) de la mousse particulaire sont reliées par collage ou par soudage.

5. Gazon artificiel selon l'une quelconque des revendications 1 à 4, dans lequel le support fibreux (5) est un tissu tissé, un tissu tricoté, un tissu crocheté, un textile posé, un mat, une feuille ou un tissu non tissé.

6. Gazon artificiel selon l'une quelconque des revendications 1 à 5, dans lequel les fibres individuelles de la couche de gazon artificiel (7) ont des longueurs différentes formant de longs brins d'herbe (13) et de courts brins d'herbe (15).

7. Gazon artificiel selon l'une quelconque des revendications 1 à 5, dans lequel le tapis artificiel d'herbe comprend des brins d'herbe qui sont droits et des brins d'herbe qui sont bouclés.

8. Gazon artificiel selon l'une quelconque des revendications 1 à 7, dans lequel le support fibreux (5) est relié à la couche d'amortissement par collage ou soudage.

9. Gazon artificiel selon la revendication 8, dans lequel, pour coller le support fibreux (5) sur la couche d'amortissement (3), un adhésif est utilisé qui est composé des mêmes unités monomères que le polymère dont est composé le support fibreux (5).

10. Gazon artificiel selon l'une quelconque des revendications 1 à 9, dans lequel l'élastomère thermoplastique est un élastomère de polyoléfine thermoplastique (TPO), un vulcanisat thermoplastique (TPV), un copolymère ou Composé séquencé styrénique thermoplastique (TPS), un polyuréthane thermoplastique (TPU), un copolyester thermoplastique (TPC) ou un polyamide thermoplastique (TPA).

11. Pelouse artificielle composée d'au moins deux modules (19) composés d'un gazon artificiel (1) selon l'une quelconque des revendications 1 à 10.

12. Pelouse artificielle selon la revendication 11, dans laquelle des modules adjacents (19) sont enfichés les uns dans les autres.

13. Pelouse artificielle selon la revendication 12, dans laquelle des modules adjacents (19) sont collés ou soudés les uns aux autres.

14. Pelouse artificielle selon l'une quelconque des revendications 11 à 13, dans laquelle les au moins deux modules (19) ont une taille qui permet de les rouler pour former des bobines pour le transport.
